Europäisches Patentamt

European Patent Office

Office européen des brevets

(11) Veröffentlichungsnummer: **0 424 731 A2**

(12) **EUROPÄISCHE PATENTANMELDUNG**

(21) Anmeldenummer: 90119436.5

(51) Int. Cl.5: **B23K 1/00**

(22) Anmeldetag: **10.10.90**

(30) Priorität: **24.10.89 CH 3834/89**

(43) Veröffentlichungstag der Anmeldung:
**02.05.91 Patentblatt 91/18**

(84) Benannte Vertragsstaaten:
**AT DE ES FR GB IT**

(71) Anmelder: **Mock, Bruno Armin**
**Buolterlistrasse 63**
**CH-6052 Hergiswil NW(CH)**

(72) Erfinder: **Mock, Bruno Armin**
**Buolterlistrasse 63**
**CH-6052 Hergiswil NW(CH)**

(74) Vertreter: **Petschner, Goetz**
**Patentanwaltsbüro G. Petschner**
**Seidengasse 18**
**CH-8001 Zürich(CH)**

(54) **Verfahren zur Herstellung einer Drehwirbel-Lötverbindung mit Muffe und Überwurfmutter für Rohranschlüsse in der Klima- und Kältetechnik.**

(57) Die Drehwirbel-Lötverbindung mit einer Muffe (2) und einer Ueberwurfmutter (1) wird so hergestellt, dass an dem einen Ende der zum Einstecken in die Ueberwurfmutter (1) bestimmten, den Drehwirbel bildenden Muffe (2) maschinell eine der Gegenfläche (3) in der Ueberwurfmutter (1) entsprechende Bördelung (4) hergestellt, die Muffe (2) in die Ueberwurfmutter (1) eingesteckt und das freie, zum Auflöten auf eine Rohrleitung bestimmte Ende der Muffe (2) auf einen vorgegebenen Rohrdurchmesser aufgeweitet wird.

Eine solche Verbindung gewährleistet insbesondere einen absolut dichten Anschluss zwischen Mitteln der Klima- und Kältetechnik.

# VERFAHREN ZUR HERSTELLUNG EINER DREHWIRBEL-LÖTVERBINDUNG MIT MUFFE UND UEBERWURF-MUTTER FÜR ROHRANSCHLÜSSE IN DER KLIMA- UND KÄLTETECHNIK

Die vorliegende Erfindung betrifft ein Verfahren zur Herstellung einer Drehwirbel Lötverbindung mit Muffe und Ueberwurfmutter für Rohranschlüsse in der Klima- und Kältetechnik.

In allen Bereichen der Klima- und Kältetechnik, beispielsweise für den Anschluss von Rohrleitungen an Klima- und Kältegeräte, besteht das Problem einer lösbaren und trotzdem dichten Anschlussverbindung. Anschlüsse dieser Art wurden deshalb an Ort am Schraubstock durch Einbördeln einer Muffe in eine Ueberwurfmutter mittels Bördelgerät und Auf weiten der Muffe auf den Durchmesser des Anschlussrohres mittels Aufweitegerät hergestellt.

Diese handwerkliche Erstellung solcher Anschlussmittel ist nicht nur aufwendig und unrationell, sondern auch bezüglich Dichtheit absolut unzulänglich und höchst bedenklich in Be zug auf die Umweltbelastung durch austretendes Kältemittel.

Es ist deshalb Aufgabe der vorliegenden Erfindung, ein Herstellungsverfahren für solche Drehwirbel-Lötverbindungen mit Muffe und Ueberwurfmutter zu schaffen, das neben und aufgrund einer fabrikatorischen Herstellungsweise eine, allen Anforderungen genügende Dichtheit gewährleistet.

Dies wird erfindungsgemäss dadurch erreicht, dass an dem einen Ende der zum Einstecken in die Ueberwurfmutter bestimmten, den Drehwirbel bildenden Muffe maschinell eine der Gegenfläche in der Ueberwurfmutter entsprechende Bördelung hergestellt, die Muffe in die Ueberwurfmutter eingesteckt und das freie, zum Auflöten auf eine Rohrleitung bestimmte Ende der Muffe auf einen vorgegebenen Rohrdurchmesser aufgeweitet wird.

Derart hergestellte Drehwirbel-Lötverbindungen gewährleisten aufgrund ihrer fabrikatorischen Präzision höchste Dichtheit zwischen Bördelung und Gegenfläche, sobald die Ueberwurfmutter am Schraubstutzen eines Gerätes oder dgl. aufgewindet und angezogen wird, so dass die Stirnfläche des Stutzens Druck auf die Bördelung ausübt. Da in der Regel die gebördelte Muffe aus einem Weich-Kupfer besteht, kann sich dabei die Stirnfläche des in der Regel aus härterem Material bestehende Stutzen in die Bördelung quasi eingraben, so dass auch dort eine absolute Dichtheit erreicht wird, ohne dass noch separate Dichtungsmittel verwendet werden müssten.

Zudem lassen sich auf diese Weise Drehwirbel-Lötverbindungen herstellen mit allen gängigen Grössen von Ueberwurfmuttern und Muffen.

Ferner betrifft die vorliegende Erfindung Drehwirbel-Lötverbindungen mit Muffe und Ueberwurfmutter, hergestellt nach dem erfindungsgemässen Verfahren.

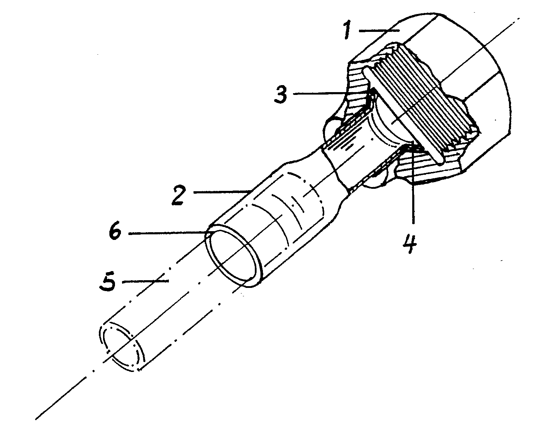

Eine beispielsweise Ausführungsform einer nach dem erfindungsgemässen Verfahren hergestellten Drehwirbel-Lötverbindung ist nachfolgend anhand der Zeichnung, welche in schaubildartiger Darstellung eine erfindungsgemässe Drehwirbel-Lötverbindung mit Muffe und Ueberwurfmutter zeigt, näher erläutert.

Zur Herstellung der gezeigten Drehwirbel-Lötverbindung wird zunächst an dem einen Ende einer zum Einstecken in eine Ueberwurfmutter 1 bestimmten, den Drehwirbel bildenden Muffe 2 in Form eines Kupferrohrstückes eine Bördelung 4 maschinell angeformt. Diese Bördelung 4 entspricht dabei genau einer inneren Gegenfläche 3 an der Ueberwurfmutter 1.

Dann wird, wie dargestellt, die mit der Bördelung 4 versehene Muffe 2 in die Ueberwurfmutter 1 eingesteckt und das freie, zum Auflöten auf eine Rohrleitung 5 bestimmte Ende der Muffe 2 auf einen vorgegebenen Rohrdurchmesser aufgeweitet.

An Ort kann dann die Muffe 2 mit der Rohrleitung 5 verlötet und das Ganze an einen Schraubstutzen eines Gerätes oder dgl. (nicht gezeigt) angewindet werden, womit ein lösbarer, absolut dichter Anschluss erreicht ist.

## Ansprüche

1. Verfahren zur Herstellung einer Drehwirbel-Lötverbindung mit Muffe und Ueberwurfmutter für Rohranschlüsse in der Klima- und Kältetechnik, dadurch gekennzeichnet, dass an dem einen Ende der zum Einstecken in die Ueberwurfmutter (1) bestimmten, den Drehwirbel bildenden Muffe (2) maschinell eine der Gegenfläche (3) in der Ueberwurfmutter (1) entsprechende Bördelung (4) herstellt, die Muffe (2) in die Ueberwurfmutter (1) eingesteckt und das freie, zum Auflöten auf eine Rohrleitung bestimmte Ende der Muffe (2) auf einen vorgegebenen Rohrdurchmesser aufgeweitet wird.

2. Drehwirbel-Lötverbindung mit Muffe und Ueberwurfmutter, hergestellt nach dem Verfahren nach Anspruch 1.